# EUROPEAN PATENT SPECIFICATION

(11) **EP 3 679 316 B1**
(45) Date of publication and mention of the grant of the patent: **02.08.2023**
(21) Application number: 18778710.6
(22) Date of filing: 05.09.2018
(51) Int. Cl.: G01B 5/008, G01B 21/04, B29C 64/118, B29C 64/209, B33Y 30/00, B33Y 10/00, G01B 5/00

(54) **ADDITIVE PRINTING CONVERSION APPARATUS AND KIT FOR COORDINATE MEASURING MACHINES**
UMWANDLUNGSVORRICHTUNG UND -KIT FÜR ADDITIVES DRUCKEN FÜR KOORDINATENMESSMASCHINEN
APPAREIL DE CONVERSION POUR IMPRESSION ADDITIVE ET KIT POUR MACHINES DE MESURE DE COORDONNÉES

(30) Priority: 08.09.2017 US 201762556042 P
(43) Date of publication of application: 15.07.2020
(73) Proprietor: Hexagon Metrology, Inc, North Kingstown, Rhode Island 02852 (US)
(72) Inventor: O'HARE, Jonathan J., East Greenwich, Rhode Island 02818 (US)
(74) Representative: Kaminski Harmann
(86) International application number: PCT/US2018/049473
(87) International publication number: WO 2019/050895

(56) References cited:
- CN-A- 107 009 621
- CN-U- 205 705 311
- US-A1- 2015 174 828
- US-A1- 2015 176 956

## Description

### FIELD OF THE INVENTION

Illustrative embodiments of the invention generally relate to additive printing and, more particularly, the illustrative embodiments of invention relate to retrofitting coordinate measuring machines for use as additive printers.

### BACKGROUND OF THE INVENTION

3D printing is a common term for what is more generally known as additive manufacturing, where objects are made by adding material to a base of some sort. For example, some 3D printing processes successively add layers of material, as opposed to subtracting material away from a larger stock of material through cutting, milling, boring or other similar process. 3D printing can use a variety of materials, including both metals and polymers. For metals, the process typically involves sintering or melting metal power for each layer being fabricated. For polymers, the process typically involves either the hardening of polymer fluid through UV light activation (known as stereolithography/SLA) or the fusing of polymer at its melting point (known as fused deposition modeling/FDM or fused filament fabrication/FFF).

In the latter case, a type of polymer known as a "thermoplastic" commonly is extruded at its melting point onto a flat surface one layer at a time to form a solid object. This process is simple because most printable thermoplastics require relatively low temperatures to fuse the layers (e.g., 190-250 degrees Celsius). As a result, the minimum required hardware often simply includes a 3D print head that extrudes the melted thermoplastic, and a positioning frame for moving the extruder in three dimensions-the X, Y, and Z dimensions/directions. Together, this simple process and the low cost of thermoplastics has given rise to the popularity of 3D printing thermoplastics using FDM. Moreover, advancements in the thermoplastics themselves, such as newly engineered polymers and composites, have led to wider use of 3D printed components for functional applications beyond just prototyping. Some of these functional applications include customized prosthetic devices, customized sports equipment, and customized tools and jigs for manufacturing.

US2015176956 A1 discloses a method for building up an object by means of a coordinate measuring machine, wherein the coordinate measuring machine has at least one control unit and one drive unit for the controlled movement of an instrument carrier in relation to a base and the instrument carrier is implemented for carrying at least one measuring sensor and production tool, which are each modularly attachable in particular, both alone in each case or in combination.

### SUMMARY OF VARIOUS EMBODIMENTS

In accordance with one embodiment of the invention, a CMM system has a CMM arm movable in at least three degrees of freedom, a 3D print head removably couplable with the CMM arm, and a thermal insulator between the print head and the CMM arm.

The CMM system also may have a base, and a heat bed removably supported by the base. With this arrangement, the heat bed is between the base and the CMM arm. The heat bed may include a sensor for monitoring the temperature of the heat bed, and a controller for controlling the temperature of the heat bed as a function of the temperature of the heat bed.

The thermal insulator protects the arm from heat-preferably substantially reducing/mitigating the heat conducted by the 3D print head during use. The thermal insulator may comprise a bracket formed from a thermally insulating material.

To facilitate material loading, the 3D print head may be positioned to be offset from the arm. For example, the 3D print head may be considered to have a print head longitudinal axis and, similarly, the CMM arm also may be considered to have an arm longitudinal axis. In this example, the head longitudinal axis is substantially parallel with the arm longitudinal axis and yet, offset with enough clearance to avoid the arm as an obstruction to facilitate material loading. In other embodiments, such as when the CMM has a horizontal arm, the two noted longitudinal axes may diverge (e.g., be normal to each other or at some angle to each other).

The CMM system can, indeed, also be used as a metrology device. To that end, the CMM system also may have a probe removably couplable with the arm. Preferably, the arm is configured to accept no more than one of the probe or the 3D print head at a single time.

In accordance with other embodiments, a kit for use with a CMM having a movable arm includes a 3D print head, a feed line fluidly connected to the 3D print head, and a bracket configured to removably couple the 3D print head with the movable arm of the CMM.

The kit also may have a heat bed configured to be supported by the base of a CMM. The heat bed has a top surface with a controllable temperature, and a bottom surface with a thermal insulating material.

The bracket conductively thermally insulates the 3D print head from the movable arm. As with other embodiments, the bracket is configured to offset the 3D print head from the movable arm when coupled with the arm.

In accordance with other embodiments, a method of retrofitting a CMM having movable arm and a base removably couples a 3D print head to the arm of the CMM, and removably positions a heat bed on the base of the CMM. The method then elevates the temperature of the heat bed.

Some embodiments discussed above and below - which may not form part of the present invention - do not use a CMM-they may use another device with an arm that moves in three or more dimensions (e.g., X, Y, and Z). Some such devices may or may not have a base below which the arm moves. For example, those embodiments may use a milling machine, a robot, a 3D vision system, or similar device.

### BRIEF DESCRIPTION OF THE DRAWINGS

Those skilled in the art should more fully appreciate advantages of various embodiments of the invention from the following "Description of Illustrative Embodiments," discussed with reference to the drawings summarized immediately below.
Figure 1A schematically shows a coordinate measuring machine (CMM) that may be configured in accordance with illustrative embodiments of the invention.
Figure 1B schematically shows a user interface that may be used with the CMM of Figure 1A.
Figured 2A and 2B schematically show front views of a CMM system implementing related embodiments of the invention.
Figure 3 schematically shows a front view of a CMM system implementing other embodiments of the invention.
Figure 4 schematically shows a perspective view of a heating bed that may be used with illustrative embodiments of the invention.
Figure 5 schematically shows a cross-sectional view of the heating bed of Figure 3.

### DESCRIPTION OF ILLUSTRATIVE EMBODIMENTS

Illustrative embodiments enable 3D printing on a large scale, such as on the scale of a large coordinate measuring machine (CMM). To that end, a CMM system may be convertible into a 3D printing device for printing, and convertible back to a CMM for metrology/measurement purposes. Among other ways, the CMM system may include a 3D print head that is removably couplable with the movable arm of the CMM itself. In addition, the CMM system also may have a portable heating bed for controlling the temperature of the base of the CMM, optimizing the contact temperature between the object being printed, and the surface upon which the object is being printed. Details of illustrative embodiments are discussed below.

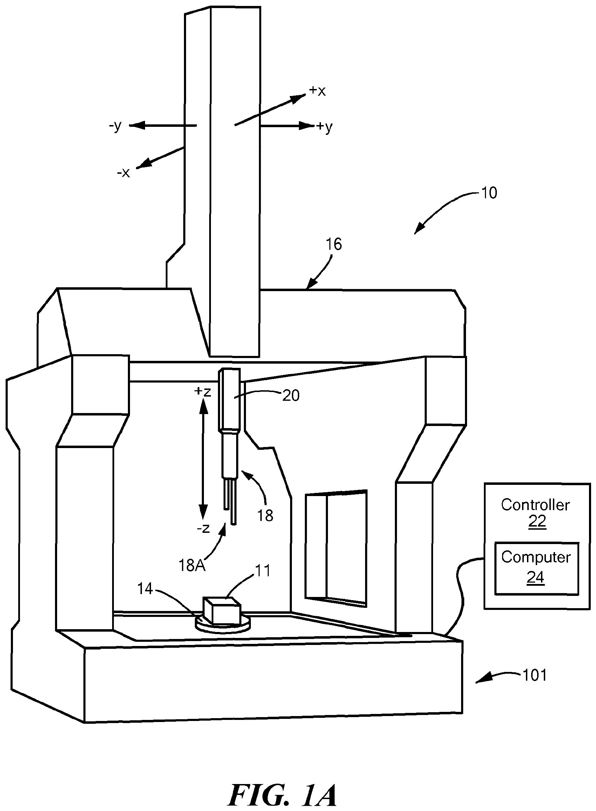

Figure 1A schematically shows of one type of coordinate measurement machine 10 (i.e., a CMM system, also referred to below as "CMM 10") that may be configured in accordance with illustrative embodiments. Indeed, this CMM 10 is but one of a number of different types of CMMs that may implement various embodiments. Accordingly, such a CMM is not intended to limit all embodiments.

As known by those in the art, the CMM 10, measures an object 11 (or work piece) on its bed/ base (referred to as "base 101"), which may be formed from granite or other material. Generally, the base 101 defines an X-Y plane that typically is parallel to the plane of the floor supporting the CMM 10. In illustrative embodiments, the base 101 supports a rotary table 14 that controllably rotates the object 11 relative to the base 101 (discussed below).

To measure the object 11, the CMM 10 has movable features 16 (e.g., a carriage 103 and other parts) arranged to move a measuring device 18, such as a probe 18A (e.g., one or more contact or non-contact (e.g., optical) probes, identified as reference number 18A), coupled with a movable arm 20. Alternately, some embodiments move the base 101 with respect to a stationary measuring device 18. Either way, the movable features 16 of the CMM 10 manipulate the relative positions of the measuring device 18 and the object 11 to obtain the desired measurement. In either case, the movable features 16 (and its arm 20, discussed below) are movable relative to the base 101.

The CMM 10 has a control system 22 that controls and coordinates its movements and activities (shown schematically in Figure 1A as "Controller 22"), which may be internal to the CMM 10, external to the CMM 10, or have both internal and external components. Among other things, the control system 22 preferably includes hardware, such as dedicated hardware systems and/or computer processor hardware. Among other things, the computer processor may include a microprocessor, such as a member of the Intel "Core i7" family of integrated circuit microprocessors available from Intel Corporation, or a digital signal processor, such as a member of the TMS320C66x family of digital signal processor integrated circuits from Texas Instruments Incorporated. The computer processor has on-board digital memory for storing data and/or computer code, including instructions for implementing some or all of the control system operations and methods. Alternately, or in addition, the computer processor may be operably coupled to other digital memory, such as RAM or ROM, or a programmable memory circuit for storing such computer code and/or control data.

Alternately, or in addition, some embodiments couple the CMM 10 with an external computer system 24 ("host computer 24"). Although Figure 1A shows the computer system 24 as part of the control system, those skilled in the art should understand that it may be separate from the control system 22. In a manner similar to the control system 22, the host computer 24 has a computer processor such as those described above, and computer memory in communication with the processor of the CMM 10. The memory is configured to hold non-transient computer instructions capable of being executed by its processor, and/or to store non-transient data, such as 1) scan path data used to guide the measuring device 18 during a measurement scan, and/or 2) data acquired as a result of the measurements of an object 11 on the base 101.

Among other things, the host computer system 24 may be implemented as one or both of a desktop computer, a tower computer, or a laptop computer, such as those available from Dell Inc., or even a tablet computer, such as the IPAD^{™} available from Apple Inc. The host computer 24 may be coupled to the CMM 10 via a hardwired connection, such as an Ethernet cable, or via a wireless link, such as a Bluetooth link or a WiFi link. As part of the control system 22, the host computer 24 may, for example, include software to control the CMM 10 during use or calibration, and/or may include software configured to process data acquired during a calibration process. In addition, the host computer 24 may include a user interface configured to allow a user to manually or automatically operate the CMM 10.

Because their relative positions typically are determined by the action of the movable features 16, the CMM 10 may be considered as having knowledge about the relative locations of the base 101, the rotary table 14, the object 11 on the rotary table, and the measuring device 18. More particularly, the control system 22 and/or computer system 24 may control and store information about the motion of the movable features 16. Alternately, or in addition, the movable features 16 of some embodiments include sensors that sense the locations of the base 101 and/or measuring device 18, and report that data to the control system 22 and/or the computer system 24. The information about the motion and position of the base 101 and/or measuring device 18 of the CMM 10 may be recorded in terms of a one dimensional, two-dimensional (e.g., X-Y; X-Z; Y-Z) or three-dimensional (X-Y-Z) coordinate system referenced to a point on the CMM 10.

The CMM 10 may have more than three degrees of freedom; i.e., more degrees of freedom in this example than in the X, Y, and Z directions. For example, the end of the arm 20 may include a wrist mechanism that rotates the measuring device 18/18A, thus providing up to three more degrees of freedom.

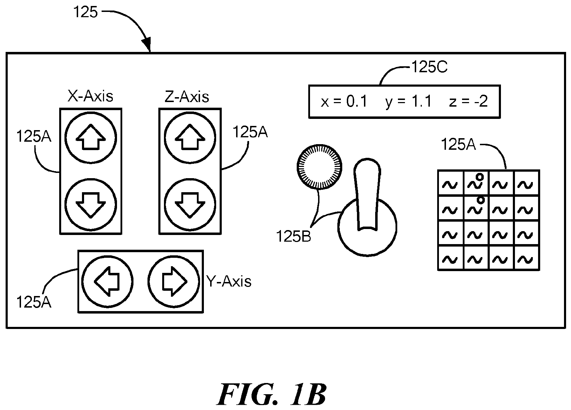

Some CMMs 100 also include a manual user interface 125 as schematically illustrated in Figure 1B. Among other things, the manual interface 125 may enable the user to change the position of the measuring device 18 or base 101/rotary table 14 (e.g., with respect to one another), and to record data relating to the position of the measuring device 18 or base 101/rotary table 14. To that end, the manual user interface 125 may have control buttons 125A and joysticks or knobs 125B that allow a user to manually operate the CMM 10. The interface 125 also may have a display window 125C (e.g., a liquid crystal display) for showing system positions, and programming certain functions and positions of the measuring device 18 or base 101. Of course, the manual interface 125 may have a number of other components and thus, the components 125A-125C shown in this drawing are for illustrative purposes only. Other embodiments may omit this manual interface 125. In illustrative embodiments, since the printing process typically is automated, this interface 125 may not be used.

In a moving table CMM 10, for example, the measuring device 18 may also be movable via control buttons 125A. As such, the movable features 16 may respond to manual control, or be under control of an internal computer processor, to move the base 101 and/or the measuring device 18 (e.g., a mechanical probe or a laser probe in a mechanical CMM 10) relative to one another. Accordingly, this arrangement permits the object 11 being measured to be presented to the measuring device 18 from a variety of angles, and in a variety of positions.

In many typical CMM applications, the inspection process needs to be carefully monitored by inspection operators. Accordingly, CMMs 10 often are only utilized during normal working shifts of those operators. In between shifts, or overnight, however, those CMMs typically are rarely used.

There also are problems when 3D printing polymers and, more specifically, thermoplastics. Specifically, large thermoplastic objects 11 are difficult to fabricate. There are several reasons for this. First, large precision positioning frames cannot be produced at a cost that justifies the throughput for printing such large objects 11. Many current small economic precision positioning systems are made from modular components with costs have been driven down by the demand for everyday desktop computer printers. This has led to the proliferation of desktop 3D printers with a market has been taken over mainly by hobbyist designers without a background in traditional manufacturing. This trend has resulted in technology being developed around these small, cost effective systems.

For example, many off-the-shelf 3D print heads are designed to extrude thermoplastic at a fixed diameter of not more than 0.7mm, which significantly limits the scalability of the current FDM technology. For example, the rate of printing an object size greater than a 250mm cube using a 0.7mm nozzle could take dozens of hours. Fabricating objects 11 larger than a 250mm cubed volume would require much higher rates of material deposition than allowed by a 0.7mm nozzle.

The surfaces required for laying thermoplastic over larger areas pose another problem. Specifically, many polymers do not easily adhere to the base surface when printing the first layer. Specifically, as a thermoplastic cools and contracts, it curls up around the edges. This effect is accentuated over greater lengths as the cooling of the polymer becomes more non-uniform. Non-uniform temperatures across the base 101 of the CMM 10 worsen this problem.

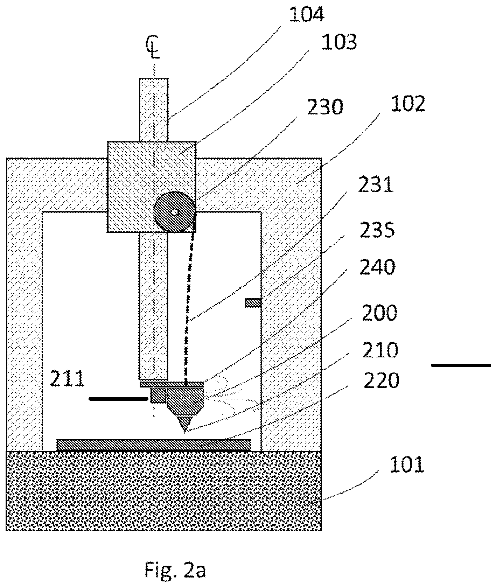

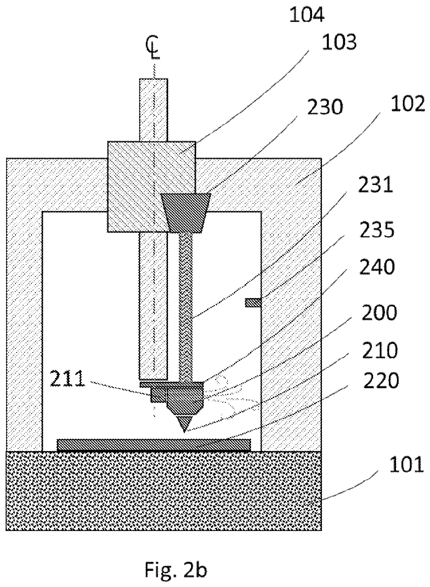

Recognizing these problems, the inventor developed a CMM system 10 to make use of the CMMs 10 at off-times, such as in the evening, and enable printing/fabrication of larger objects 11. Specifically, these embodiments retro-fit the CMM 10 of Figure 1A with 3D printing equipment so that the CMM 10 may be used at off-hours as a 3D printer. The design also has thermal and physical protective measures to protect the sensitive and carefully calibrated CMM 10 from incidental damage by the 3D printing process. To those ends, Figures 2A and 2B schematically show front views of a CMM system 10 configured in accordance with illustrative embodiments of the invention.

As shown, the probe head/measuring device 18 at the end of the arm 20 is removed and replaced with a 3D print head 200. The 3D print head 200 preferably is fitted to the CMM frame by means of an adaptor bracket 240, which offsets the 3D print head vertical axis from the vertical rail's axis (i.e., the axis of the arm 20). This offset arrangement allows the printed material to be loaded into the extruder with minimal obstruction. The adaptor 240 is also equipped with a locking joint mechanism that may be used to quickly change the 3D print head 200 by either manual or automatic means.

To mitigate/reduce the conductive thermal effects from the heated 3D print head 200, the adaptor bracket 240 may be made of a thermally insulative material, such as carbon fiber, or otherwise incorporate a layer of thermally insulating material between the 3D print head 200 and the vertical rail/arm 20 . This thermally insulating material significantly mitigates conductive heat transfer between the 3D print head 200 and the vertical axis rail of the CMM 10, protecting the CMM arm 20 and frame.

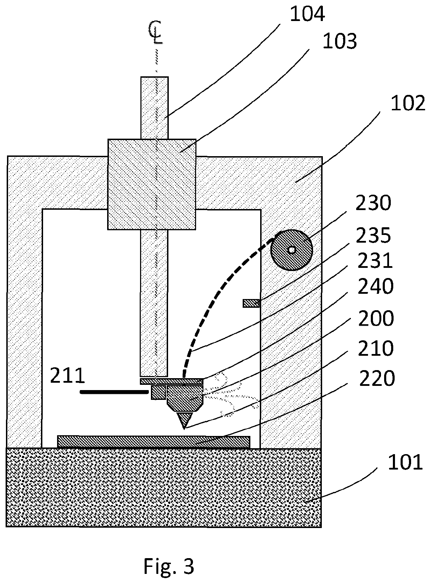

Undesirably, there also may be heat transfer in the form of convection, such as moving hot air. To mitigate that heat, the CMM system 10 also has a cooling fan 211 incorporated into the 3D print head 200, or at some other location, to help regulate the temperature of the hot end of the 3D print head 200. Temperature regulation of the 3D print head hot end is required for consistent flow of the extruded material through its nozzle. Poor placement of the fan 211, however, could transfer this heat to the CMM frame by means of convection, thus affecting measurement and/or printing performance. Illustrative embodiments therefore position and orient of the fan 211 so that the heated air be directed away from the critical members of the CMM frame. This can be achieved by positioning the fan 211 directly or nearly below the vertical rail/arm 20 (shown as 211 in Figure 3). This position therefore directs airflow toward the 3D print head hot end and away from the centerline of the vertical rail/arm 20. Some embodiments may incorporate the fan 211 with 3D print head 200 as a single unit. This only means that the placement of such integral 3D print heads 200 should be completed in a similar way to that described using a separate fan 211. One preference for mitigating convection heat transfer to the CMM frame is to direct the exhaust air from the hot end of the 3D print head 200 away from the mounting rail.

As noted, the CMM system 10 has a material dispenser 230 that is easily accessible and does not interfere with the normal positioning of the CMM frame. For thermoplastics, many material dispensers 230 may be in the form of a spool containing 1.75mm or 3.0mm filament. The spool type dispenser 230 can be mounted remotely from the 3D print head 200, such as on a stationary part the CMM frame. The dispenser 230 fluidly connects with the 3D print head 200 using a feed-line. Placing the dispenser 230 on a stationary part of the frame enables a large quantity of printing material to be available without introducing the weight of that stored material at the moving 3D print head 200.

Similarly, another location for a material dispenser 230 (shown as 230 in Figure 2A) on a CMM frame is either on the movable carriage 103, or on the supporting drive leg of the bridge (shown as 102 in Figure 3). One benefit of mounting the material dispenser 230 on the carriage 103 is that the vertical rail/arm 20 does not bear the weight of the material and is aligned with the 3D print head 200 during positioning. The direct vertical alignment of the material dispenser 230 and 3D print head 200 also helps ensure reliability of the material loading, especially if the material is in the form of filament. For brittle thermoplastics, filament may more readily break when frequently bent from the rapid motion of the 3D print head 200. Illustrative embodiments mitigate this possibility by having a shorter distance and straighter path for the filament. Other loading systems that use different forms of stock material also benefit from having a short fixed distance between the 3D print head 200 and material dispenser 230. For example, material being loaded in the form of pellets into a feeding hopper (shown as 230 in Figure 2B) may require the assistance of gravity through a feeding tube 231 or flexible duct (shown as 231 in Figure 2B), which orients the feeding tube 231 vertically with respect to the 3D print head 200.

Illustrative embodiments control the temperature of the base 101 to ensure effective printing conditions for supporting the object 11 as it is being printed. To that end, the CMM system 10 also has a heat bed 220 or controllably heated surface that is movable to different positions on the CMM working surface 221, as well as removable from the CMM system 10 when not needed. For example, among other things, the heat bed 220 may be in the form of a movable pallet (also identified by reference number "220") as shown in Figures 2A, 2B and 3. Though not all 3D printing materials require a heat bed 220, the printing performance of a wide variety of polymers often is improved by maintaining the initial layer close to the polymer's glass transition temperature. This is particularly true when fabricating larger objects 11 that are more susceptible to thermal contraction over large areas, while the working surface 221 is at ambient temperature. In fact, one of the benefits of utilizing a CMM frame for 3D printing is having a larger than typical work area and volume (e.g., a 10 to 100 square foot area work surface)-permitting fabrication of larger objects 11. Thus, the desired size of this heated working surface 221 typically is larger than what is commonly found in the 3D printing components market. This enables a user to take advantage of the large surface area and precision of the CMM 10 for printing an object 11.

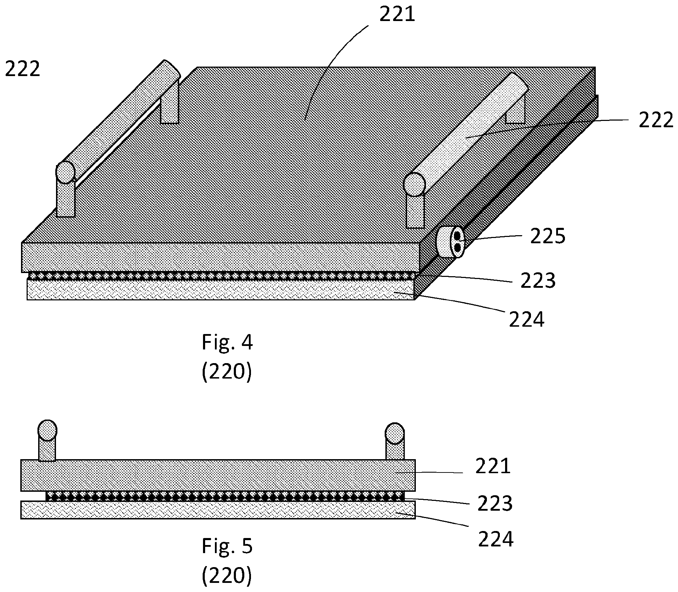

Figure 4 thus shows the heat bed 220, which may be used with illustrative embodiments of the invention. Figure 5 schematically shows a cross-sectional view of that heat bed 220. This heating unit may contain a matrix of smaller off-the-shelve heat beds 220, or other standardized electric heating elements configured to supply enough heat for the larger surface. The heat bed 220 also preferably has a temperature sensor or plurality of temperature sensors (not shown) to monitor the surface temperature, and control logic (e.g., a controller) to regulate it to a set temperature point/range through a feedback control loop. Accordingly, the control logic may monitor the temperature sensor, via the temperature sensor(s), and elevate, maintain, and/or reduce the temperature as required to remain within a prescribed temperature range.

To further assist regulating temperature over the large heat bed surface, the top of the heat bed 220 may have a work surface 221 acting as a heat sink formed from aluminum or other thermally conductive material. This work surface also serves as a structural component-accounting for the stiffness required for a flat 3D printing surface.

The heat bed/pallet 220 also is configured to protect the base 101 of the CMM system 10. Specifically, in preferred embodiments, the movable heat bed/pallet 220 also has an insulative barrier 224 formed from a rugged, durable material. Among other things, the insulative barrier 224 may function as both movable contact surface and thermal insulator between the electric heating unit and the CMM work surface 221. The pallet 220 also has handles or lifting brackets (both generically identified by reference number 222) to more easily move/remove the whole pallet 220, as well as a socket 225 for connecting/disconnecting power. The handles 222 enable a user to manually place and position the pallet on and off the CMM working surface 221. As such, the heat bed/pallet 220 may be considered removable or as simply being placed on the base 101 of the CMM system 10. For automated pallet changing systems, lifting brackets 222 may be substituted for the handles 222 so that an easier mechanical engagement can be made with an automatic pallet changing system.

Likewise, the socket 225 for connecting the power and data sources may be utilized in either or both of a manual or automated fashion. For a manual implementation, the power and data cable may be plugged into the socket 225 by hand. For an automated implementation, the plug for the power and data cable may be fixed to some point on the CMM working surface 221 so that it is aligned with the socket 225 and automatically engaged via the pallet changing system.

The CMM system 10 has switching logic for switching between two modes; namely, a printing mode and a measuring mode. For example, the controller 22 and/or the computer 24 may have an interface enabling a user to switch between both modes. In preferred embodiments, the CMM system 10 is used in no more than one mode-and not in both modes at the same time.

Some embodiments of the invention may be implemented as a kit with one or more of the 3D print head 200, feed line (if not using spools), feeder, and adapter bracket 240. The kit also may include the heat bed 220 and other related components. Instructions with the kit may instruct a user on how to change the CMM system 10 between the measuring mode and the printing mode.

To switch from the measuring mode to the printing mode, a user or logic removes a probe 18A and couples the adapter bracket 240 to the arm 20. The bracket 240 already may have the 3D print head 200 coupled to it. If not, then the user or logic may secure the 3D print head 200 to the bracket 240, and couple the feeder and feed line as appropriate to the CMM structure. The feeder then may be fed with thermoplastic, and the mode may be changed to the printing mode. The reverse process may be used to change from the printing mode to the measuring mode.

The 3D print head 200 thus is easily removable so that the CMM 10 can be restored for measurement applications instead of 3D printing applications. To further facilitate the ease of integration, the 3D print head 200 may be wired directly through the vertical rail/arm 20 in a manner that is similar to the way that a measurement probe head is wired. In fact, the 3D print head 200 also may share some or all of the same wiring as a measurement probe head so that the 3D
print head 200 may be controlled through the same software or firmware. For automated changing, the 3D print head 200 also may have a similar means to that of the measurement head of connecting and disconnecting the 3D print head 200 for automated changing.

Rather than using a CMM 10, some embodiments - which may not form part of the present invention - may use another system with a movable element. For example, those embodiments may use another device with a horizontal, vertical, or other arm or other structure that moves in three or more dimensions (e.g., X, Y, and Z). Some such devices may or may not have the base 101 below the arm. For example, those embodiments may use a milling machine, a robot, a 3D vision system, or similar device.

Although the above discussion discloses various exemplary embodiments of the invention, it should be apparent that those skilled in the art can make various modifications that will achieve some of the advantages of the invention without departing from the true scope of the invention as defined by the appended claims.

## Claims

1. A CMM system (10) comprising:
a CMM arm (20) movable in at least three degrees of freedom;
a 3D print head (200) removably couplable with the arm (20);
**characterized by**
a thermal insulator between the print head (200) and the arm (20).

2. The CMM system (10) of claim 1, **characterized by** further comprising:
a base (101); and
a heat bed (220) removably supported by the base (101), the heat bed (220) being between the base (101) and the CMM arm (20),
in particular wherein the heat bed (220) comprises:
a sensor for monitoring the temperature of the heat bed (220); and
a controller for controlling the temperature of the heat bed (220) as a function of the temperature of the heat bed (220).

3. The CMM system (10) of claim 1, **characterized in that** the thermal insulator comprises a bracket (240) formed from a thermally insulating material.

4. The CMM system (10) of claim 1, **characterized in that** the 3D print head (200) is positioned to be offset from the CMM arm (20).

5. The CMM system (10) of claim 4, **characterized in that** the 3D print head (200) has a print head longitudinal axis, further wherein the CMM arm (20) has an arm longitudinal axis, the head longitudinal axis being substantially parallel with, or diverging from, the arm longitudinal axis.

6. The CMM system (10) of claim 1, **characterized by** further comprising a probe (18) removably couplable with the CMM arm (20), the CMM arm (20) being configured to accept no more than one of the probe (18) or the 3D print head (200) at a single time.

7. A kit for use with a CMM (10) having a movable arm (20), the kit comprising:
a 3D print head (200);
a feeder (230,231) for feeding material to the 3D print head (200); and
a bracket (240) configured to removably couple the 3D print head (200) with the movable arm (20) of the CMM (10);
**characterized in that** the bracket (240) conductively thermally insulates the 3D print head (200) from the movable arm (20).

8. The kit of claim 7, **characterized by** further comprising a heat bed (220) configured to be supported by a base (101) of a CMM (10), in particular wherein the heat bed (220) includes a top surface with a controllable temperature, the heat bed (220) also includes a bottom surface with a thermal insulating material, particularly wherein the heat bed (220) comprises:
a sensor for monitoring the temperature of the heat bed (220); and
a controller for controlling the temperature of the heat bed (220) as a function of the temperature of the heat bed (220).

9. The kit of claim 7, **characterized in that** the bracket (240) is configured to offset the 3D print head (200) from the movable arm (20).

10. A method of retrofitting a CMM (10) having movable arm (20) and a base (101), the method comprising:
removably coupling a 3D print head (200) to the movable arm (20) of the CMM (10);
removably positioning a heat bed (220) on the base (101) of the CMM (10); and
elevating the temperature of the heat bed (220), particularly with
monitoring the temperature of the heat bed (220) and
adjusting the temperature of the heat bed (220) when the temperature extends outside of a prescribed temperature range,
in particular with removing a probe (18) from the movable arm (20) before removably coupling the 3D print head (200) to the arm (20) of the CMM (10);
**characterized in that** removably coupling a 3D print head (200) comprises coupling a bracket (240) between the 3D print head (200) and the arm (20) of the CMM (10), the bracket (240) being a thermal insulator insulating the 3D print head (200) from the movable arm (20).

11. The method of claim 10, **characterized by** further comprising loading thermoplastic material into a feeder (230,231), and directing the loaded thermoplastic to the 3D print head (200).

12. The method of claim 10, **characterized in that** removably coupling a 3D print head (200) comprises coupling the 3D print head (200) to be offset from the arm (20) of the CMM (10).

13. The method of claim 10, **characterized in that** the heat bed (220) includes a top surface with a controllable temperature, the heat bed (220) also includes a bottom surface with a thermal insulating material.

## Patentansprüche

1. CMM-System (10), umfassend:
einen CMM-Arm (20), der in mindestens drei Freiheitsgraden beweglich ist;
einen 3D-Druckkopf (200), der mit dem Arm (20) entfernbar koppelbar ist;
**gekennzeichnet, durch**
einen Wärmeisolator zwischen dem Druckkopf (200) und dem Arm (20).

2. CMM-System (10) nach Anspruch 1, **dadurch gekennzeichnet, dass** es ferner Folgendes umfasst:
eine Basis (101); und
ein Heizbett (220), das durch die Basis (101) entfernbar getragen wird, wobei sich das Heizbett (220) zwischen der Basis (101) und dem CMM-Arm (20) befindet,
wobei das Heizbett (220) insbesondere Folgendes umfasst:
einen Sensor zum Überwachen der Temperatur des Heizbetts (220); und
eine Steuerung zum Steuern der Temperatur des Heizbetts (220) in Abhängigkeit von der Temperatur des Heizbetts (220).

3. CMM-System (10) nach Anspruch 1, **dadurch gekennzeichnet, dass** der Wärmeisolator eine Halterung (240) umfasst, die aus einem wärmeisolierenden Material gebildet ist.

4. CMM-System (10) nach Anspruch 1, **dadurch gekennzeichnet, dass** der 3D-Druckkopf (200) so positioniert ist, dass er von dem CMM-Arm (20) versetzt ist.

5. CMM-System (10) nach Anspruch 4, **dadurch gekennzeichnet, dass** der 3D-Druckkopf (200) eine Druckkopf-Längsachse aufweist, ferner wobei der CMM-Arm (20) eine Arm-Längsachse aufweist, wobei die Kopf-Längsachse im Wesentlichen parallel zu der Arm-Längsachse ist oder davon divergiert.

6. CMM-System (10) nach Anspruch 1, **dadurch gekennzeichnet, dass** es ferner eine Sonde (18) umfasst, die mit dem CMM-Arm (20) entfernbar koppelbar ist, wobei der CMM-Arm (20) dazu konfiguriert ist, nicht mehr als eines von der Sonde (18) oder dem 3D-Druckkopf (200) zum selben Zeitpunkt aufzunehmen.

7. Kit zur Verwendung mit einer CMM (10), die einen beweglichen Arm (20) aufweist, wobei das Kit Folgendes umfasst:
einen 3D-Druckkopf (200);
eine Zuführvorrichtung (230, 231) zum Zuführen eines Materials zu dem 3D-Druckkopf (200); und
eine Halterung (240), die dazu konfiguriert ist, den 3D-Druckkopf (200) entfernbar mit dem beweglichen Arm (20) der CMM (10) zu koppeln;
**dadurch gekennzeichnet, dass** die Halterung (240) den 3D-Druckkopf (200) leitfähig von dem beweglichen Arm (20) wärmeisoliert.

8. Kit nach Anspruch 7, **dadurch gekennzeichnet, dass** es ferner ein Heizbett (220) umfasst, das dazu konfiguriert ist, durch eine Basis (101) einer CMM (10) getragen zu werden, wobei das Heizbett (220) insbesondere eine obere Fläche mit einer steuerbaren Temperatur beinhaltet, wobei das Heizbett (220) zudem eine untere Fläche mit einem wärmeisolierenden Material beinhaltet, wobei das Heizbett (220) insbesondere Folgendes umfasst:
einen Sensor zum Überwachen der Temperatur des Heizbetts (220); und
eine Steuerung zum Steuern der Temperatur des Heizbetts (220) in Abhängigkeit von der Temperatur des Heizbetts (220).

9. Kit nach Anspruch 7, **dadurch gekennzeichnet, dass** die Halterung (240) dazu konfiguriert ist, den 3D-Druckkopf (200) von dem beweglichen Arm (20) zu versetzen.

10. Verfahren zum Nachrüsten einer CMM (10), die einen beweglichen Arm (20) und eine Basis (101) aufweist, wobei das Verfahren Folgendes umfasst:
entfernbares Koppeln eines 3D-Druckkopfs (200) an den beweglichen Arm (20) der CMM (10);
entfernbares Positionieren eines Heizbetts (220) auf der Basis (101) der CMM (10); und
Erhöhen der Temperatur des Heizbetts (220), insbesondere durch
Überwachen der Temperatur des Heizbetts (220) und
Einstellen der der Temperatur des Heizbetts (220), wenn sich die Temperatur außerhalb eines vorgeschriebenen Temperaturbereichs erstreckt,
insbesondere durch Entfernen einer Sonde (18) von dem beweglichen Arm (20) vor dem entfernbaren Koppeln des 3D-Druckkopfs (200) an den Arm (20) der CMM (10);
**dadurch gekennzeichnet, dass** das entfernbare Koppeln eines 3D-Druckkopfs (200) Koppeln einer Halterung (240) zwischen dem 3D-Druckkopf (200) und dem Arm (20) der CMM (10) umfasst, wobei die Halterung (240) ein Wärmeisolator ist, der den 3D-Druckkopf (200) von dem beweglichen Arm (20) isoliert.

11. Verfahren nach Anspruch 10, **dadurch gekennzeichnet, dass** es ferner Laden eines thermoplastischen Materials in eine Zuführvorrichtung (230, 231) und Richten des geladenen Thermoplasts auf den 3D-Druckkopf (200) umfasst.

12. Verfahren nach Anspruch 10, **dadurch gekennzeichnet, dass** das entfernbare Koppeln eines 3D-Druckkopfs (200) Koppeln des 3D-Druckkopfs (200), sodass er von dem Arm (20) der CMM (10) versetzt ist, umfasst.

13. Verfahren nach Anspruch 10, **dadurch gekennzeichnet, dass** das Heizbett (220) eine obere Fläche mit einer steuerbaren Temperatur beinhaltet, wobei das Heizbett (220) zudem eine untere Fläche mit einem wärmeisolierenden Material beinhaltet.

## Revendications

1. Système CMM (10) comprenant :
un bras CMM (20) mobile dans au moins trois degrés de liberté ;
une tête d'impression 3D (200) pouvant être couplée de manière amovible au bras (20),
**caractérisé par**
un isolant thermique entre la tête d'impression (200) et le bras (20).

2. Système CMM (10) selon la revendication 1, **caractérisé par** le fait de comprendre de plus :
une base (101) et
un lit chauffant (220) supporté de manière amovible par la base (101), le lit chauffant (220) étant entre la base (101) et le bras CMM (20), en particulier le lit chauffant (220) comprenant :
un capteur pour surveiller la température du lit chauffant (220) et
un contrôleur pour contrôler la température du lit chauffant (220) comme une fonction de la température du lit chauffant (220).

3. Système CMM (10) selon la revendication 1, **caractérisé en ce que** le lit chauffant comprend une console (240) formée en un matériau thermo-isolant.

4. Système CMM (10) selon la revendication 1, **caractérisé en ce que** la tête d'impression 3D (200) est positionnée pour être décalée du bras CMM (20).

5. Système CMM (10) selon la revendication 4, **caractérisé en ce que** la tête d'impression 3D (200) a un axe longitudinal de tête d'impression, de plus cependant que le bras CMM (20) a un axe longitudinal de bras, l'axe longitudinal de tête d'impression étant substantiellement parallèle à ou divergent de l'axe longitudinal de bras.

6. Système CMM (10) selon la revendication 1, **caractérisé par** le fait de comprendre de plus une sonde (18) pouvant être couplée de manière amovible au bras CMM (20), le bras CMM (20) étant configuré pour accepter pas plus d'un des éléments à la fois, la sonde (18) ou la tête d'impression 3D (200).

7. Kit d'utilisation avec un CMM (10) qui a un bras mobile (20), le kit comprenant :
une tête d'impression 3D (200) ;
un dispositif d'alimentation (230, 231) pour amener du matériau à la tête d'impression 3D (200) et
une console (240) configurée pour coupler de manière amovible la tête d'impression 3D (200) au bras mobile (20) du CMM (10),
**caractérisé en ce que** la console (240) isole thermiquement de manière conductrice la tête d'impression 3D (200) du bras mobile (20).

8. Kit selon la revendication 7, **caractérisé par** le fait de comprendre de plus un lit chauffant (220) configuré pour être supporté par une base (101) d'un CMM (10), en particulier cependant que le lit chauffant (220) comprend une surface de dessus avec une température contrôlable, le lit chauffant (220) comprenant aussi une surface inférieure avec un matériau thermo-isolant, en particulier cependant que le lit chauffant (220) comprend :
un capteur pour surveiller la température du lit chauffant (220) et
un contrôleur pour contrôler la température du lit chauffant (220) comme une fonction de la température du lit chauffant (220).

9. Kit selon la revendication 7, **caractérisé en ce que** la console (240) est configurée pour décaler la tête d'impression 3D (200) du bras mobile (20).

10. Procédé de modernisation d'un CMM (10) qui a un bras mobile (20) et une base (101), le procédé comprenant :
le couplage de manière amovible d'une tête d'impression 3D (200) au bras mobile (20) du CMM (10) ;
le positionnement de manière amovible d'un lit chauffant (220) sur la base (101) du CMM (10) et
l'élévation de la température du lit chauffant (220), en particulier avec
la surveillance de la température du lit chauffant (220) et
l'ajustement de la température du lit chauffant (220) lorsque la température dépasse une plage de température prescrite,
en particulier avec l'enlèvement d'une sonde (18) du bras mobile (20) avant de coupler de manière amovible la tête d'impression 3D (200) au bras (20) du CMM (10),
**caractérisé en ce que** le couplage de manière amovible d'une tête d'impression 3D (200) comprend le couplage d'une console (240) entre la tête d'impression 3D (200) et le bras (20) du CMM (10), la console (240) étant un isolant thermique qui isole la tête d'impression 3D (200) du bras mobile (20).

11. Procédé selon la revendication 10, **caractérisé par** le fait de comprendre de plus le chargement de matériau thermoplastique dans un dispositif d'alimentation (230, 231) et de diriger le matériau thermoplastique chargé vers la tête d'impression 3D (200).

12. Procédé selon la revendication 10, **caractérisé en ce que** le couplage de manière amovible d'une tête d'impression 3D (200) comprend le couplage de la tête d'impression 3D (200) pour être décalée du bras (20) du CMM (10).

13. Procédé selon la revendication 10, **caractérisé en ce que** le lit chauffant (220) comprend une surface de dessus avec une température contrôlable, le lit chauffant (220) comprenant aussi une surface inférieure avec un matériau thermo-isolant.
